Europäisches Patentamt

European Patent Office

Office européen des brevets

(11) Publication number: **0 456 953 A1**

# EUROPEAN PATENT APPLICATION

(21) Application number: 90830416.5

(51) Int. Cl.⁵: **A01G 9/10**

(22) Date of filing: **24.09.90**

(30) Priority: **15.05.90 US 523673**

(43) Date of publication of application:
**21.11.91 Bulletin 91/47**

(84) Designated Contracting States:
**AT BE CH DE DK ES FR GB GR IT LI LU NL SE**

(71) Applicant: **Shiau, Ding-Ho**
**No. 36, Alley 33, Lane 851, Her Sheng Road**
**Sec. 1**
**Ping Tong City(TW)**

Applicant: **Shiau, In-Jgh**
**No. 36, Alley 33, Lane 851, Her Sheng Road**
**Sec. 1**
**Ping Tong City(TW)**

(72) Inventor: **Shiau, Ding-Ho**
**No. 36, Alley 33, Lane 851, Her Sheng Road**
**Sec. 1**
**Ping Tong City(TW)**
Inventor: **Shiau, In-Jgh**
**No. 36, Alley 33, Lane 851, Her Sheng Road**
**Sec. 1**
**Ping Tong City(TW)**

(74) Representative: **Righetti, Giuseppe**
**Bugnion S.p.A. Via Carlo Farini, 81**
**I-20159 Milano(IT)**

(54) **Potting material for plant culture.**

(57) A material for plant culture was prepared by adding suitable granular water-absorbent and excess granular stuff which are heavy and harmless for the growth of plant during the process for manufacturing foam-cotton. The lump of the material for plant culture was obtained after tearing this foam-material. Once it is applied to plant culture such as floriculture, horticulture, it contains the following functions: good water-absorption, nice water-retention and high specific gravity. As a result this foam-material is especially good for plant's fixation and basin's stability.

EP 0 456 953 A1

This invention provides the procedure to produce a material which is useful for plant culture.

The traditional materials used for plant culture are soil, serpentine, woodshred, bark or some artificial materials such as Hydrocorn (made in Holland) and Best Clay (made in Japan). These materials have been found some defects.

(1) These materials are expensive. The source of serpentine woodshred is getting less and less. The cost of import material such as Best Clay from Japan and Hydrocorn from Holland is increasing. Those reflect that the materials for plant culture become more expensive.

(2) The basin is heavy. Using soil as material for plant culture, the overall weight of the basin is very heavy. It is not convenient for transferring and hanging up.

(3) The materials contain bacteria. There are many harmful bacteria in soil, serpentine woodshred and bark. They can affect the plant growth. Moreover, laws of many countries have prohibited the import of those material to prevent the incoming of bacteria.

(4) Cultural plants have restriction. Plant should grow up under suitable material. For instance, orchids with aerobic root have to grow up in well-ventilated serpentine woodshred. On the other hand, foliage plants or regular vegetables should grow up in soil. They will wither or decay if the plants bear in improper cultural material.

Based on the material, there are two types of foam-macro-molecule (foam cotton or sponge) in artificially cultural material. One is foam rubber, the other is foam plastic. Based on the structure, the sponge-like foam also has two types: independent and overt foam structures. The process for preparing these materials is mixing the rubber and/or plastic monomer, foaming reagent and hardening reagent together. After stirring, foaming reagent releases gas to form bubbles, and hardening reagent fixes the texture. Then, a porous foam substance is obtained.

The overt foam substance can easily absorb water into the holes and store there for a long time. We can tear or pound the substance into small lumps which are suitable for use in plant culture. However those materials have also been found several defects.

(1) Overt foam substances always absorb and store water but the water absorbed may evaporate or drain down in a very short time because all holes are linked together. It cannot fulfill the condition that after each water-sprinkling the water should be conserved for one, two or three days, whereas independent foam substance also fails to absorb water well.

(2) If the pieces of foam substance are used as material for plant culture, the upper and middle layers easily dry up due to evaporation. The lower part however can keep water and thus inhibits the normal growth of the root.

(3) The weight of overt foam substance is light. Its specific gravity is around 0.01. That means only 10 g of the foam substance can be filled in 1 l of a basin. It is not good for plant cultural material because the plant stem could not fix well and the basin could not stand stably. And, the weight of independent foam substance is much lighter than that of overt foam substance. Moreover, the overall weight of the plastic basin has been greatly reduced by substituted with plastic ones in the present market.

Consequently, artificial foam substance is not suitable for plant culture. The principal for preparing the material for plant culture in this invention is based on the method for preparing polyurethane which is a kind of independent foam substance. During the process for preparing polyurethane, granular water absorbent, sand or heavy grounded mineral or other inert heavy material are added to increase the water-absorbing ability and the overall specific gravity. Granular water absorbent may be either super absorbent polymer (the absorbing capacity -- 500-800 times of its own weight) or Bentonite (the absorbing capacity -- 15-20 times of its own weight). The foam substance containing suitable amount of water absorbent can absorb water to be a water-ball which is wrapped by foam material. Therefore the water inside can be stored for a long time. The mechanism for the storage of water is different from overt foam substance. Water is absorbed into each independent hole and cannot be evaporated quickly.

A heavier foam substance can be made if it is mixed with granular mineral or sand. The percentage of mineral or sand in the foam substance will affect the volume and weight of foam substance. Adding mineral or sand 10-15 times by weight of foam substance is recommended. That means it is the best of containing 100-150 g of torn foam substance in 1 l of basin.

This independent foam material subjects to mechanical pounding to form cracks. So, water can be permeated into the holes through the cracks. There are several advantages.

(1) The storage of permeated water is in each independent hole. Therefore the foam material will not become upper dry and lower wet, and thus may supply enough water for a long time. Consequently, the root of plant may not sink into water and may process good respiration. Therefore, plants can grow up normally.

(2) Super absorbent polymer has ability to absorb much water. It will be dissolved or washed out when it exposed to large excess water such as sprinkling water or rainfall for a long time. If the absorbing agent is wrapped by foam substance the absorbent may not be immersed with excess water. Hence the storage function of this material can last longer.

The preparation of the material for plant culture in this invention is as follows:

Method I: 1 kg of Polyol (a foaming reagent in preparing polyurethane), 10 kg of sand, 0.1 kg of super absorbent polymer and 0.2 kg of Bentonite are mixed together. 1 kg of isocyanate (a hardening reagent) is added into this mixture. After stirring for several seconds the mixture expands and hardens into a foam material. It is then torn and pounded mechanically to form small lumps with 8-25 mm in size. This is the product of this invention.

Method II: 1 kg of Polyol, 12 kg of granular mineral, 0.1 kg of super absorbent polymer, 0.2 kg of Bentonite and 0.01 kg of red pigment are mixed together. 1 kg of isocyanate is added. A red product is obtained as method I. For colorful appearance, foam material with various colors can be prepared by adding different pigments.

The product of this invention is very chemically stable. It is by no means any harm to the growth of plant.

After long period investigation, the invention has cultured many plants such as flower-plants and vegetables successfully. The inventor has also worked with the growth of cabbage from seed sprouting to full growing. It is all satisfied.

When the product is immersed into water, the pH of the solution is 7.0. This neutral solution is suitable and good pH condition prove that this material is suitable for plant culture. The comparisons about water-absorbing and water-losing ability among naturally cultural material, commercial cultural material and the product of this invention are shown in appendix 1 and 2. The water-losing ability will reflect the water-retaining ability. We have found the product of this invention is the best of all. Besides above benefits this invented material has more advantages.

(1) The cost of this product is cheap because the starting materials, plastic foam substance, granular mineral and sand, are plenty and very cheap. It is especially cheap for mass production.

(2) The foam material can be torn or pounded into small lumps with 8-25 mm size. There is 100-150 g of culture material in 1 l of basin. This weight is suitable for handling, carrying or hanging up.

(3) The product does not contaminate pathogenic bacteria because the foam material is prepared by chemical process. Hence, it is safe to use for plant culture.

(4) During the manufacturing process of making this foam material, essential minerals for plant growing such as nitrogen, phosphorus or potassium can be added. This can easily manage and save cost of laboring.

(5) Various pigments can be added into the foam material during the preparation. These make plant culture more colorful and fun.

(6) The foam material and many additives are chemically inert. It is still good for plant culture after long-time use. Therefore the material can be used repeatedly.

Brief description about appendixes:

Appendix 1. The comparison about maximum water-content test among different cultural materials in 1 l of basin.

Appendix 2. The comparison about water-lost test.

Appendix 3. The sample of this invention.

Appendix 4. The sample of serpentine woodshread #1.

Appendix 5. The sample of serpentine woodshred #2.

Appendix 6. The sample of Best Clay from Japan.

Appendix 7. The sample of Hydrocorn from Holland.

Appendix 1. The comparison about maximum water-content test among different cultural materials in a 1 1 of basin[a].

Method: The stuff is filled into the basin as usual. The maximum water content is the increasing weight of the basin after sprinkling with water for 60 min and dry automatically.

| Description[b] | Product of this invention | Serpentine woodshred #1 | Serpentine woodshred #2 | Best Clay from Japan | Hydrocorn from Holland |
|---|---|---|---|---|---|
| Specification | 10-20 mm lumps | 5-8 cm long | 2-4 cm long | 8-15 mm crystals | 8-15 mm crystals |
| Dry weight of cultural material in 1 1 of basin | 130 g | 70 g | 100 g | 420 g | 400 g |
| Maximum water-content | 400 g | 65 g | 100 g | 260 g | 200 g |

a. The specification for 1 L of basin container is top diameter 12 cm   height 11 cm   bottom diameter 9 cm.

b. All the tested samples are the real samples as appendix 3, 4, 5, 6, 7.

EP 0 456 953 A1

Appendix 2. The comparison about water-lost test (i.e. water-retention test).

Method:[a] The stuff is filled into the basin and sprinkled with water for 10 min. The water-lost index is the decreasing weight of the basin.

| Description[b] | Product of this invention | Serpentine woodshred #1 | Serpentine woodshred #2 | Best Clay from Japan | Hydrocorn from Holland |
|---|---|---|---|---|---|
| Specification | 10-20 mm lumps | 5-8 cm long | 2-4 cm long | 8-15 mm crystals | 8-15 mm crystals |
| Total weight of the stuff | 130 g | 70 g | 100 g | 420 g | 400 g |
| Water-content 5 min after sprinkling | 180 g | 60 g | 95 g | 215 g | 90 g |
| 2 h | 155 g | 50 g | 70 g | 190 g | 65 g |
| 4 h | 130 g | 30 g | 60 g | 165 g | 45 g |
| 6 h | 110 g | 20 g | 50 g | 145 g | 35 g |
| 8 h | 100 g | 15 g | 50 g | 120 g | 30 g |
| 10 h | 95 g | 5 g | 40 g | 120 g | 25 g |
| 15 h | 95 g | 5 g | 40 g | 110 g | 20 g |
| 20 h | 90 g | 5 g | 40 g | 100 g | 15 g |
| 24 h | 90 g | 5 g | 35 g | 95 g | 15 g |
| Percentage of water-lost after 24 h | 50% | 91.6% | 63.1% | 55.8% | 83.3% |
| Function of water-retention after 24 h | 50% | 8.4% | 36.9% | 44.2% | 16.7% |

a. The test is proceeded under 75% shielded black cloth at outdoor temperature, 38°C and indoor temperature, 35°C during the daytime. The first 10 h is performed during daytime. The second 10 h is performed at night.

b. All the tested samples are the real samples as appendix 3, 4, 5, 6, 7.

## Claims

1. A kind of material for plant culture is made from rubber (or plastic) independent or overt foam substance mixed with large amount and harmless additives and proper amount of water-absorbing agent. After stirring, it expands and hardens into foam material which is then torn or pounded into small lumps. The functions are high water-containing good water-retaining and heavy. It can be used in various plant culture.

2. The material according to claim 1, in which the additives are the granular mineral, sand, or other heavy, harmless granular substances.

3. The material according to claim 1, in which the water-absorbing agent is strong water absorbing resin, Bentonite or other harmless granular water absorbing agent.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 979 198 (BARDSLEY)<br>* column 2, line 35 - column 3, line 65 * * column 10, line 62 - line 66 *<br>– – – | 1-3 | A 01 G 9/10 |
| X,P | EP-A-0 377 923 (SEKISUI KASEIHIN KOGYO)<br>* page 5, line 37 - line 50 * * page 10, line 8 - line 48 *<br>– – – | 1-3 | |
| A | EP-A-0 313 255 (EXXON CHEMICAL PATENTS)<br>* column 9, line 14 - line 56 *<br>– – – – – | 1-3 | |

|  | TECHNICAL FIELDS SEARCHED (Int. Cl.5) |
|---|---|
|  | A 01 G |

The present search report has been drawn up for all claims

| Place of search | Date of completion of search | Examiner |
|---|---|---|
| The Hague | 29 May 91 | HERYGERS J.J. |